# EUROPEAN PATENT SPECIFICATION

(11) **EP 2 161 859 B1**
(45) Date of publication and mention of the grant of the patent: **27.06.2012**
(21) Application number: 08105246.6
(22) Date of filing: 05.09.2008
(51) Int. Cl.: H04B 10/08

(54) **Safety and power control arrangement for optical fiber communication apparatus**
Sicherheits- und Leistungssteuerungsanordnung für Lichtleitfaser-Kommunikationsvorrichtung
Agencement de contrôle d'alimentation et de sécurité pour appareil de communication à fibre optique

(43) Date of publication of application: 10.03.2010
(73) Proprietor: Nokia Siemens Networks OY, 02610 Espoo (FI)
(72) Inventor: Schimpe, Robert, Dr., 85521 Ottobrunn (DE)
(74) Representative: Bruglachner, Thomas E.

(56) References cited:
- EP-A- 1 006 682
- US-A1- 2007 098 411
- US-A1- 2007 121 195
- US-B1- 6 359 708

## Description

### FIELD OF THE INVENTION

The invention relates to a safety and power control arrangement for optical fiber communication apparatus.

### BACKGROUND OF THE INVENTION

In optical transmission systems optical signals are transmitted over an optical fiber. If the fiber is accidentally cut and the optical signal would still be transmitted a service person would be harmed if he happened to look at the concentrated light signal being emitted from the broken fiber. To avoid such harm, there is the need for a safety arrangement that automatically reduces the power of a light signal to avoid injuries.

The patent US 6,359,708 B1 describes a facility which detects the loss of a high power optical signal in an optical transmission path and invokes a procedure which causes a transmitter connected to the cut fiber to reduce the power level of an optical signal emitted to a safe level.

The patent application US 2007/0098411 A1 discloses a method and a apparatus for automatic shut-down and start up of optical amplifiers in optical bidirectional networks. If a fiber is broken all amplifiers are shut down one after another. The complete apparatus is out of order and should be avoided in circuits packs as stated above.

The patent application EP 006682 A1 discloses an automatic power shut-down arrangement for bi-directional optical line systems. If a broken fiber is detected a supervisory signal "Remote Defect Indicator" is transmitted via the faultless fiber. As a result, all amplifiers are shut-down or the power is automatic reduced to a save level.

The US patent US 6 359 708 discloses a similar bi-directional transmission line automatic power reduction system. After detecting a loss-of-signal a telemetry-signal is transmitted to reduce the power emitted into the cut line.

The same safety arrangement is necessary within an optical apparatus comprising a plurality of circuit packs (optical devices), which are connected via optical fibers. A possibility is to interrupt the line directly downstream of a transmitter/optical amplifier or to shut down the transmitter/optical amplifier if LOS (loss of signal) is determined. But especially in systems where the optical signal is split and sent to a plurality of circuit packs an interruption of that fiber or the shut down of the transmitter results in interrupting all other connection.

Another possibility is to avoid an interruption and to control the power of the transmitter up to a predetermined safe value. But in many cases, especially when a plurality of channels are transmitted, the emitted power of the transmitter is reduced to the safe value while the emitted power at the broken end further down the fiber is far below a permissible value.

### OBJECTS AND SUMMARY OF THE INVENTION

It is object of the invention to reduce the power of an emitted optical signal to an allowable amount if an optical fiber is interrupted, and to ensure that the optical signal can be transmitted with a reasonable power level via non interrupted fiber segments to non-affected circuits.

According to a first embodiment of the invention, there is provided a safety and power control arrangement for optical communication apparatus, wherein a first circuit pack emitting an optical signal, and at least a second and a third circuit pack are connected in series via optical fibers, with a first power monitor connected to an output of the at least second circuit pack:
loss-of-signal monitors connected to inputs of the second circuit pack and at least third circuit pack;
a control device designed for receiving a power control signal from the at least second circuit pack and loss-off-signal control signals from the at least second and third circuit pack, and decreasing the output power of the first circuit pack according to a power control signal of the last power monitor of the last circuit pack receiving the optical signal till its measured output power is reduced to a safe power value, if the next downstream circuit pack determines loss-of-signal.

According to a second embodiment of the invention there is provided a safety and power control arrangement for optical communication apparatus, where a first circuit pack, emitting an optical signal, and a splitter circuit pack are connected in series via an optical fiber, and at least a third and a fourth circuit pack are connected via further optical fibers to outputs of the splitter circuit pack, with
a first power monitor and an at least second power monitor connected to outputs of the splitter circuit pack;
loss-of-signal monitors connected to inputs of the third circuit pack and/or the at least fourth circuit pack;
a control device designed for receiving power control signals from outputs of the splitter circuit pack and loss-off-power control signals from the at least third and fourth circuit packs, and for decreasing the output power of the first circuit pack according to the power control signal of the last power monitor of the last circuit pack receiving the optical signal till its measured output power is reduced to a safe power value, if the next downstream circuit pack determines a loss-of-signal.

Details of the invention are described in the depending claims.

### BRIEF DESCRIPTION OF THE DRAWINGS

Examples of the invention including a presently preferred embodiment are described below with reference to accompanying drawings, where
FIG 1 is a schematic diagram of an optical transmission apparatus equipped with the safety and power control according to the invention, and
FIG 2 is a schematic diagram of an optical transmission apparatus with distributed channels equipped according to the invention.

### DETAILED DESCRIPTION OF THE INVENTION

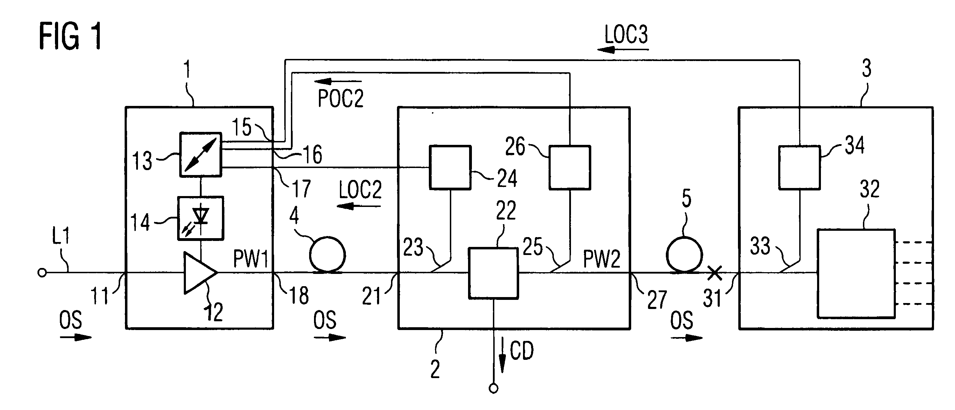

**FIG 1** illustrates a simplified block diagram of an apparatus with a safety and power control according to the invention. A first circuit pack (circuit assembly) 1 comprises, beside other equipment, an optical amplifier 12 and a control device 13 determining the output power PW1 of the optical amplifier 12 by controlling a pump source 14. An optical signal OS, e.g. a wavelength division multiplex signal, is received via a transmission fiber L1 at an input 11 of the first circuit pack 1 and amplified. The optical signal remains denoted OS while travelling through the arrangement even if a few channels; e.g. CD, may be dropped. The output 18 of the first circuit pack 1 is connected via an optical fiber 4 to an input 21 of a second circuit pack 2. This circuit pack 2 comprises an optical device 22, a loss-of-signal monitor 24 connected to the input 21 (input may be a suitable place on the board), and a power monitor 26 connected to the output 27 (after the last optical circuit). Both monitors 25, 26 are connected via splitters 23 and 25 respectively with the optical fibers 4 and 5 transmitting the optical signal. The output signal of a circuit pack has a lower power level than the input signal because of the attenuation of the passive elements like filters, splitters, add-drop-devices etc. within that optical device.

A plurality of these circuit packs, here 1, 2 and 3, may be connected in series. An input 31 of last circuit pack 3 or the "end" circuit pack, is connected via the optical fiber 5 to an output 27 of the second circuit pack 2. A LOS monitor 34 is connected via a splitter 33 to the input 31. The end circuit pack does not need a power monitor, because - presuming the apparatus is a receiver - the optical signal is determined and converted into an electrical signal by the circuit device 32 or because the device 32 is splitting the signal into a plurality of tributary signals each having a power level being low from a laser safety point of view (dotted lines in FIG 1).

The power monitor 26 sends its power control signal POC2 to the control device 13, preferably situated within the first circuit pack 1. The power control signal POC2 can be a measured power level or, after comparing the measured power level with a predetermined value, a (binary) overpower signal indicating that the power is too high.

The loss-of-signal monitors 24 and 34 send control signals LOC2 and LOC3 with (binary) logical information, e.g. via an electrical connection. The loss-of-signal is e.g. determined by measuring the intensity of the received optical signal.

If the optical fiber 4 between the first and the second circuit pack is interrupted, the loss-of-signal monitor 24 determines LOS (loss of signal). An emitted LOS control signal LOC2 is emitted and received at the control device 13 and decreases, independent of the power control signal POL2, the output power PW1 to an allowed predetermined safe value.

Now it is assumed that the optical fiber 5 between the second circuit pack 2 and the third circuit pack 3 is interrupted (X in the drawing). A LOS control signal LOS3 is emitted from the third circuit pack 3 and a power control signal POC2 is emitted from the second circuit pack 2. These control signals are received by the control device 13 (inputs 15, 16, 17). The control device 13 makes a logical decision and selects the first LOS control signal in a serial connection and decreases the output power PW1 of the first circuit pack 1, but now controlled by the foregoing power monitor 26, which determines exactly the optical power 'PW2 = allowed safe power' emitted into an interrupted fiber 5. The safe power is the maximum allowed light power inserted into an interrupted fiber. The foregoing circuit packs can still receive the optical signal OS with sufficient or at least the highest possible power level, and the emitted output power does not exceed the allowed save power.

In another embodiment the power monitor may compare, as mentioned before, the output power PW2 with an 'allowed safe power value' and forward only an 'overpower' signal. If the optical fiber 5 between the second circuit pack 2 and the following third circuit pack 3 is interrupted, the output power PW2 is decreased by the control device 13 till this 'overpower' control signal vanishes. The output power is not decreased if it is already lower than the safe power level.

A line safety protection arrangement is not shown for the first transmission line L1 other because this is not a part of the invention another problems have to be considered.

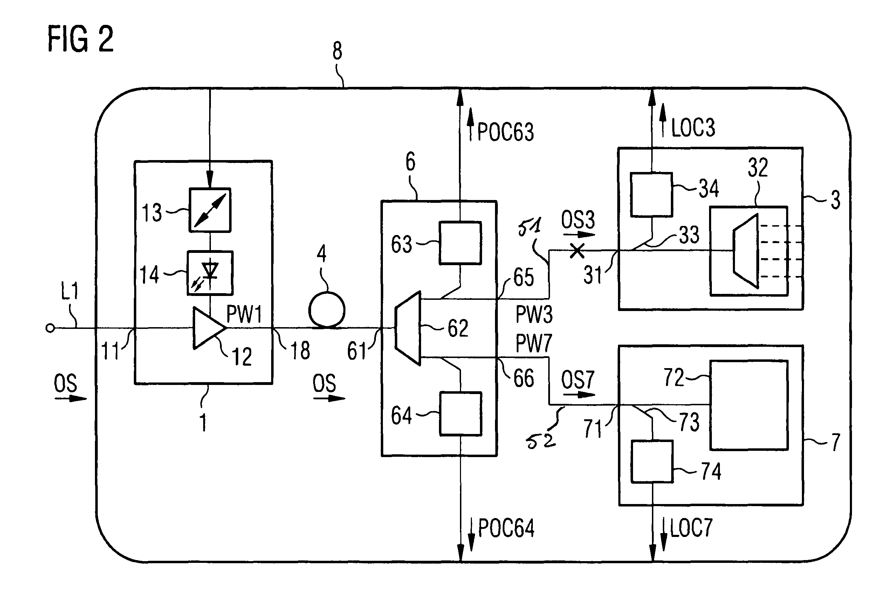

**FIG 2** illustrates a simplified block diagram of a further arrangement comprising the first circuit pack 1 with the optical amplifier 12 and the control device 13, a modified second circuit block 6 connected to the output 17 of the first circuit pack 1. The second circuit pack 6 comprises an optical splitter 62. The inputs of 31, 71 of two further circuit packs 3 and 7 are connected to outputs 65 and 66 of the modified second circuit pack 6.

The first circuit pack 1 has almost the same function as described before. The "splitter" second circuit pack 6 comprises the optical splitter, e.g. a deinterleaver, which is separating the channels of the optical signal into two (or more) signals or groups OS3 and OS7. Each group is forwarded to one of the following circuit packs 3 and 4. The circuit pack 6 is denoted as splitter circuit pack.

The splitter circuit pack 6 has two power monitors 63 and 64, each connected to an output 65 and 66 respectively. Their power control signals POC63 and POC64 are forwarded to the control device 13, in this embodiment via a safety bus ring 8. A LOS monitor at the input is not necessary if no internal data processing is carried out within this circuit pack, as will be explained below.

Inputs 31 and 71 of the last circuit packs 3 and 7 are directly connected via optical fibers 51 and 52 to outputs 65 and 66 of the splitter circuit pack 6. Each circuit pack 3 and 7 comprises only a LOS monitor 34 and 74. The received optical signals OS3 and OS7 are converted into electrical signals in the optical-electrical devices 32 and 72 or e.g. the device 32 is splitting the signal into a plurality of tributary signals each having a power level being low from a laser safety point of view.

If one of the LOS monitors 34 or 74 determines a LOS, e.g. LOS monitor 34 detects the LOS according to an interruption (X in the drawing) in the upper fiber it forwards a LOS control signal LOC3 to the control device 13. Then the emitted signal power PW1 is reduced according to the power control signal POC63 of the associated power monitor 63 of the forgoing circuit pack 6. The control device decreases the output power PW3 emitted into the interrupted upper fiber to the safe power level. The signal power PW7 in the other branch is also reduced, but the associated power control POC64 signal is not taken into account, because there is no LOS control signal emitted by the associated next downstream LOS monitor 74. According to the number of channels the total power of the undisturbed branch can be higher.

If both LOS monitors 34 and 74 determine LOS, then it can be assumed that the fiber 4 is interrupted and the output power PW1 of the first circuit pack 1 is reduced to the predetermined safe value. The power monitors 63 and 64 can also substitute a LOS monitors connected to the input of the splitter pack. If both report a level of about zero the output power PW1 is reduced to the safe level.

More than the shown circuit packs may be connected in series or in series and parallel. And the branches of the arrangement of FIG 2 may comprise two or more circuit packs connected in series. The control mechanism has to be adapted to the configuration. It is always the output power of the circuit pack before the interruption which has to be decreased to the predetermined safe value which is always controlled by the power monitor of that circuit pack.

To avoid malfunctions a guard time may be allocated to the control signals. To avoid control problems of amplifiers/receivers allocated in the devices 32, 72 or in further circuit packs connected thereto, the output power of the first circuit pack is decreased and/or increased continuously or in small steps.

### REFERENCE SIGNS

- 1: first circuit pack
- 11: input
- 12: edfa
- 13: control device
- 14: pump source
- 15: control signal input
- 16: control signal input
- 17: control signal input
- 18: output

- 2: second circuit pack
- 21: input
- 22: optical device
- 23: splitter
- 24: LOS monitor
- 23:
- 26: splitter
- 25: power monitor
- 3: third/last circuit pack
- 31: input
- 32: opto-electrical device
- 34: LOS monitor
- 33: splitter
- 34: LOS monitor
- 4: optical fiber
- 5: optical fiber
- 6: splitter circuit pack
- 61: input
- 62: splitter/deinterleaver
- 63: power monitor
- 64: power monitor
- 65: output
- 66: output
- 7: circuit pack
- 71: input
- 72: device
- 73: splitter
- 74: LOS monitor

- OS: optical signal
- OS3: optical signal
- OS7: optical signal
- LOS: LOSS OF SIGNAL
- LOC2: LOS control signal of circuit pack 2
- LOC3: LOS control signal of CP3
- POC2: power control signal of circuit pack 2
- POC63: first power control signal of CP6
- POC64: second power control signal of CP6
- PW1: output signal power of CP1
- PW2: output signal power of CP2
- 51: optical fiber
- 52: optical fiber

## Claims

1. Safety and power control arrangement for optical communication apparatus comprising a first circuit pack (1), at least one second circuit pack (2), and an end circuit pack (3) connected in series via optical fibers (4, 5), wherein the first circuit pack (CP1) includes a control device (13) for controlling output power (PW1) of an optical signal (OS) and is adapted to emit said optical signal (OS) via the at least one second circuit pack (2, ...) and the end circuit pack (3), where all circuit packs (2, ...; 3) arranged downstream from the first circuit pack (1) are attenuating said optical signal (OS);
comprising
at least one power monitor (26, ...) connected to an output of the at least one second circuit pack (2, ...);
loss-of-signal monitors (24, 34) respectively connected to inputs of the at least second circuit pack (2, ...) and the end circuit pack (3);
the control device (13) designed for receiving a power control signal (POC2) from the at least one power monitor (26, ...) of the at least one second circuit pack (2, ...) and loss-of-signal control signals (LOC2, LOC3) from the loss-of-signal monitors (24, 34) of the at least one second circuit pack (2, ...) and the end circuit pack (3), and for
decreasing the output power (PW1) of the first circuit pack (CP1) according to the power control signal (POC2) of a power monitor (26, ...) of the second circuit pack (2) till the measured output power (PW2) of the second circuit pack (2) is reduced to a safe power value, if the loss-of-signal monitor (34) of the next downstream circuit pack (3) determines loss-of-signal.

2. Safety and power control arrangement according to claim 1,
wherein the control device (13) is designed to reduce an output power level to the safe power value if loss-of-signal monitor (24) of the second circuit pack (2) reports a loss-of-signal.

3. Safety and power control arrangement according to claim 1,
wherein an end circuit pack (3) comprises only a loss-of-signal monitor (34) and does not comprise any power monitor.

4. Safety and power control arrangement according to claim 1,
wherein the power monitors (26, ...) are designed to compare the measured output power (PW2, ...) with a predetermined value and to transmit a overpower signal as a power control signal to the control device (13) if the output power (PW2, ...) is too high.

5. Safety and power control arrangement according to claim 1,
wherein control device (13) is designed for decreasing and/or increasing the output power (PW1) continuously or in small steps.

6. Safety and power control arrangement for optical communication apparatus comprising a first circuit pack (CP1) and a splitter circuit pack (6), which is connected downstream in series via an optical fiber (4), and at least a third and a fourth circuit pack (3, 7) connected via further fibers to outputs (65, 66) of the splitter circuit pack (6), wherein the first circuit pack (CP1) includes a control device (13) for controlling output power (PW1) of an optical signal (OS) and is adapted to emit said optical signal (OS) via the splitter circuit pack (6) and said at least third and fourth circuit packs (3, 7), where all circuit packs (6, 3, 7) arranged downstream from the first circuit pack (1) are attenuating said optical signal; comprising
a first power monitor (63) and an at least one second power monitor (64) respectively connected to outputs (65, 66) of the splitter circuit pack (6);
loss-of-signal monitors (34, 74) connected to inputs (31, 71) of the third circuit pack (3) and the at least fourth circuit pack (7) respectively;
the control device (13) designed for receiving power control signals (POC63, POC64) from the first power monitor (63) and the at least second power monitor (64) of the splitter circuit pack (6) and loss-of-signal control signals (LOC3, LOC7) from the loss-of-signal monitors (34, 74) of the third and the at least fourth circuit pack (3, 7), and for
decreasing the output power (PW1) of the first circuit pack (CP1) according to the power control signal (POC63) of one of the power monitors (63) of said splitter circuit pack (6) till the measured output power (PW3) of the splitter circuit pack (CP1) is reduced to a safe power value, if the loss-of-signal monitor (34) of the next downstream circuit pack (3) determines a loss-of-signal.

7. Safety and power control arrangement according to claim 6,
wherein the power monitors (63, 64) of the splitter circuit pack (6) are designed to compare the measured output power (PW2, ...) with a predetermined value and to transmit an overpower signal if the output power (PW2, ...) is too high.

8. Safety and power control arrangement according to claim 6,
wherein the output power (PW1) of the first circuit pack (1) is decreased to the safe power value, if all the circuit packs (3, 7) connected to outputs of the splitter circuit pack (6) determine loss-of-signal.

9. Safety and power control arrangement according to claim 6,
wherein the control device (13) is designed for decreasing and/or increasing the output power (PW1) continuously or in small steps.

10. Safety and power control arrangement according to one of the claims 6 to 9,
wherein the control signals (POC2, ...; LOC2, ..) are transmitted via a ring bus (8).

## Patentansprüche

1. Sicherheits- und Leistungsregelanordnung für eine optische Kommunikationsvorrichtung, umfassend ein erstes Schaltungspack (1), mindestens ein zweites Schaltungspack (2) und ein Endschaltungspack (3), die über optische Fasern (4, 5) in Reihe geschaltet sind, wobei das erste Schaltungspack (CP1) eine Regeleinrichtung (13) zum Regeln der Ausgangsleitung (PW1) eines optischen Signals (OS) umfasst und dafür ausgelegt ist, das optische Signal (OS) über das mindestens eine zweite Schaltungspack (2, ...) und das Endschaltungspack (3) zu emittieren, wobei alle Schaltungspacks (2, ...; 3), die signalabwärts des ersten Schaltungspacks (1) angeordnet sind, das optische Signal (OS) dämpfen;
umfassend
mindestens eine Leistungsüberwachungsvorrichtung (26, ...), die mit einem Ausgang des mindestens einen zweiten Schaltungspacks (2, ...) verbunden ist;
Signalverlust-Überwachungsvorrichtungen (24, 34), die jeweils mit Eingängen des mindestens zweiten Schaltungspacks (2, ...) und des Endschaltungspacks (3) verbunden sind;
wobei die Regeleinrichtung (13) dafür ausgelegt ist, ein Leistungsregelsignal (POC2) von der mindestens einen Leistungsüberwachungsvorrichtung (26, ...) des mindestens einen zweiten Schaltungspacks (2, ...) und Signalverlust-Regelsignale (LOC2, LOC3) von den Signalverlust-Überwachungsvorrichtungen (24, 34) des mindestens einen zweiten Schaltungspacks (2, ...) und des Endschaltungspacks (3) zu empfangen und zum
Verringern der Ausgangsleistung (PW1) des ersten Schaltungspacks (CP1) gemäß dem Leistungsregelsignal (POC2) einer Leistungsüberwachungsvorrichtung (26, ...) des zweiten Schaltungspacks (2), bis die gemessene Ausgansleistung (PW2) des zweiten Schaltungspacks (2) auf einen sicheren Leistungswert reduziert ist, wenn die Signalverlust-Überwachungsvorrichtung (34) des nächsten signalabwärtsgelegenen Schaltungspacks (3) Signalverlust bestimmt.

2. Sicherheits- und Leistungsregelanordnung nach Anspruch 1,
wobei die Regeleinrichtung (13) dafür ausgelegt ist, einen Ausgangsleistungspegel auf den sicheren Leistungswert zu reduzieren, wenn die Signalverlust-Überwachungsvorrichtung (24) des zweiten Schaltungspacks (2) einen Signalverlust meldet.

3. Sicherheits- und Leistungsregelanordnung nach Anspruch 1,
wobei ein Endschaltungspack (3) nur eine Signalverlust-Überwachungsvorrichtung (34) umfasst und keine Leistungsüberwachungsvorrichtung umfasst.

4. Sicherheits- und Leistungsregelanordnung nach Anspruch 1,
wobei die Leistungsüberwachungsvorrichtungen (26, ...) dafür ausgelegt sind, die gemessene Ausgangsleistung (PW2, ...) mit einem vorbestimmten Wert zu vergleichen und ein Überleistungssignal als ein Leistungsregelsignal zu der Regeleinrichtung (13) zu senden, wenn die Ausgangsleistung (PW2, ...) zu hoch ist.

5. Sicherheits- und Leistungsregelanordnung nach Anspruch 1,
wobei die Regeleinrichtung (13) dafür ausgelegt ist, die Ausgangsleistung (PW1) kontinuierlich oder in kleinen Schritten zu verkleinern und/oder zu vergrößern.

6. Sicherheits- und Leistungsregelanordnung für eine optische Kommunikationsvorrichtung, umfassend ein erstes Schaltungspack (CP1) und ein Teilerschaltungspack (6), das signalabwärts über eine opische Faser (4) in Reihe geschaltet ist, und mindestens ein drittes und ein viertes Schaltungspack (3, 7), die über weitere Fasern mit Ausgängen (65, 66) des Teilerschaltungspacks (6) verbunden sind, wobei das erste Schaltungspack (CP1) eine Regeleinrichtung (13) zum Regeln der Ausgangsleistung (PW1) eines optischen Signals (OS) umfasst und dafür ausgelegt ist, das optische Signal (OS) über das Teilerschaltungspack (6) und das mindestens dritte und vierte Schaltungspack (3, 7) zu emittieren, wobei alle Schaltungspacks (6, 3, 7), die signalabwärts des ersten Schaltungspacks (1) angeordnet sind, das optische Signal dämpfen;
umfassend
eine erste Leistungsüberwachungsvorrichtung (63) und mindestens eine zweite Leistungsüberwachungsvorrichtung (64), die jeweils mit Ausgängen (65, 66) des Teilerschaltungspacks (6) verbunden sind;
Signalverlust-Überwachungsvorrichtungen (34, 74), die mit Eingängen (31, 71) des dritten Schaltungspacks (3) bzw. des mindestens vierten Schaltungspacks (7) verbunden sind;
wobei die Regeleinrichtung (13) dafür ausgelegt ist, Leistungsregelsignale (POC63, POC64) von der ersten Leistungsüberwachungsvorrichtung (63) und der mindestens zweiten Leistungsüberwachungsvorrichtung (64) des Teilerschaltungspacks (6) und Signalverlust-Steuersignale (LOC3, LOC7) von den Signalverlust-Überwachungsvorrichtungen (34, 74) des dritten und mindestens vierten Schaltungspacks (3, 7) zu empfangen und zum
Verringern der Ausgangsleistung (PW1) des ersten Schaltungspacks (CP1) gemäß dem Leistungsregelsignal (POC63).

7. Sicherheits- und Leistungsregelanordnung nach Anspruch 6, wobei die Leistungsüberwachungsvorrichtungen (63, 64) des Teilerschaltungspacks (6) dafür ausgelegt sind, die gemessene Ausgangsleistung (PW2, ...) mit einem vorbestimmten Wert zu vergleichen und ein Überleistungssignal zu senden, wenn die Ausgangsleistung (PW2, ...) zu hoch ist.

8. Sicherheits- und Leistungsregelanordnung nach Anspruch 6, wobei die Ausgangsleistung (PW1) des ersten Schaltungspacks (1) auf den sicheren Leistungswert verkleinert wird, wenn alle mit Ausgängen des Teilerschaltungspacks (6) verbundenen Schaltungspacks (3, 7) Signalverlust bestimmen.

9. Sicherheits- und Leistungsregelanordnung nach Anspruch 6, wobei die Regeleinrichtung (13) dafür ausgelegt ist, die Ausgangsleistung (PW1) kontinuierlich oder in kleinen Schritten zu verkleinern und/oder zu vergrößern.

10. Sicherheits- und Leistungsregelanordnung nach einem der Ansprüche 6 bis 9,
wobei die Steuersignale (POC2, ...; LOC2, ..) über einen Ringbus (8) gesendet werden.

## Revendications

1. Un agencement de commande de puissance et de sécurité pour un appareil de communication optique comprenant un premier pack de circuits (1), au moins un deuxième pack de circuits (2) et un pack de circuits d'extrémité (3) raccordés en série par l'intermédiaire de fibres optiques (4, 5), dans lequel le premier pack de circuits (CP1) comprend un dispositif de commande (13) destiné à commander la puissance de sortie (PW1) d'un signal optique (OS) et est adapté de façon à émettre ledit signal optique (OS) par l'intermédiaire du au moins un deuxième pack de circuits (2, ...) et du pack de circuits d'extrémité (3), où tous les packs de circuits (2, ... , 3) agencés en aval du premier pack de circuits (1) atténuent ledit signal optique (OS),
comprenant
au moins un dispositif de surveillance de puissance (26, ...) raccordé à une sortie du au moins un deuxième pack de circuits (2, ...),
des dispositifs de surveillance de perte de signal (24, 34) respectivement raccordés à des entrées du au moins deuxième pack de circuits (2, ...) et du pack de circuits d'extrémité (3),
le dispositif de commande (13) conçu de façon à recevoir un signal de commande de puissance (POC2) provenant du au moins un dispositif de surveillance de puissance (26, ...) du au moins un deuxième pack de circuits (2, ...) et des signaux de commande de perte de signal (LOC2, LOC3) provenant des dispositifs de surveillance de perte de signal (24, 34) du au moins un deuxième pack de circuits (2, ...) et du pack de circuits d'extrémité (3), et de façon à
réduire la puissance de sortie (PW1) du premier pack de circuits (CP1) selon le signal de commande de puissance (POC2) d'un dispositif de surveillance de puissance (26, ...) du deuxième pack de circuits (2) jusqu'à ce que la puissance de sortie mesurée (PW2) du deuxième pack de circuits (2) soit réduite à une valeur de puissance sans danger, si le dispositif de surveillance de perte de signal (34) du pack de circuits en aval suivant (3) détermine une perte de signal.

2. Un agencement de commande de puissance et de sécurité selon le revendication 1,
dans lequel le dispositif de commande (13) est conçu de façon à réduire un niveau de puissance de sortie à la valeur de puissance sans danger si le dispositif de surveillance de perte de signal (24) du deuxième pack de circuits (2) signale une perte de signal.

3. Un agencement de commande de puissance et de sécurité selon le revendication 1,
dans lequel un pack de circuits d'extrémité (3) comprend uniquement un dispositif de surveillance de perte de signal (34) et ne comprend aucun dispositif de surveillance de puissance.

4. Un agencement de commande de puissance et de sécurité selon le revendication 1,
dans lequel les dispositifs de surveillance de puissance (26, ...) sont conçus de façon à comparer la puissance de sortie mesurée (PW2, ...) à une valeur prédéterminée et à transmettre un signal de surpuissance en tant que signal de commande de puissance au dispositif de commande (13) si la puissance de sortie (PW2, ...) est trop élevée.

5. Un agencement de commande de puissance et de sécurité selon le revendication 1,
dans lequel dispositif de commande (13) est conçu de façon à réduire et/ou augmenter la puissance de sortie (PW1) de manière continue ou par petites étapes.

6. Un agencement de commande de puissance et de sécurité pour un appareil de communication optique, comprenant un premier pack de circuits (CP1) et un pack de circuits de diviseur (6), qui est raccordé en aval en série par l'intermédiaire d'une fibre optique (4), et au moins un troisième et/ou un quatrième pack de circuits (3, 7) raccordés par l'intermédiaire d'autres fibres (51, 57) vers des sorties (65, 66) du pack de circuits de diviseur (6), dans lequel le premier pack de circuits (CP1) comprend un dispositif de commande (13) destiné à commander la puissance de sortie (PW1) d'un signal optique (OS) et est adapté de façon à émettre ledit signal optique (OS) par l'intermédiaire du pack de circuits de diviseur (6) et desdits au moins troisième et quatrième packs de circuits (3, 7), où tous les pack de circuits (6, 3, 7) agencés en aval du premier pack de circuits (1) atténuent ledit signal optique,
comprenant
un premier dispositif de surveillance de puissance (63) et au moins un deuxième dispositif de surveillance de puissance (64) respectivement raccordés à des sorties (65, 66) du pack de circuits de diviseur (6),
des dispositifs de surveillance de perte de signal (34, 74) raccordés à des entrées (31, 71) du troisième pack de circuits (3) et du au moins quatrième pack de circuits (7) respectivement,
le dispositif de commande (13) conçu de façon à recevoir des signaux de commande de puissance (POC63, POC64) provenant du premier dispositif de surveillance de puissance (63) et du au moins deuxième dispositif de surveillance de puissance (64) du pack de circuits de diviseur (6) et des signaux de commande de perte de signal (LOC3, LOC7) provenant des dispositifs de surveillance de perte de signal (34, 74) du troisième et du au moins quatrième pack de circuits (3, 7), et de façon à
réduire la puissance de sortie (PW1) du premier pack de circuits (CP1) selon le signal de commande de puissance (POC63) de l'un des dispositifs de surveillance de puissance (63) dudit pack de circuits de diviseur (6) jusqu'à ce que la puissance de sortie mesurée (PW3) du pack de circuits de diviseur (CP1) soit réduite à une valeur de puissance sans danger, si le dispositif de surveillance de perte de signal (34) du pack de circuits en aval suivant (3) détermine une perte de signal.

7. Un agencement de commande de puissance et de sécurité selon le revendication 6, dans lequel les dispositifs de surveillance de puissance (63, 64) du pack de circuits de diviseur (6) sont conçus de façon à comparer la puissance de sortie mesurée (PW2, ...) à une valeur prédéterminée et à transmettre un signal de surpuissance si la puissance de sortie (PW2, ...) est trop élevée.

8. Un agencement de commande de puissance et de sécurité selon le revendication 6, dans lequel la puissance de sortie (PW1) du premier pack de circuits (1) est réduite à une valeur de puissance sans danger, si tous les packs de circuits (3, 7) raccordés à des sorties du pack de circuits de diviseur (6) déterminent une perte de signal.

9. Un agencement de commande de puissance et de sécurité selon le revendication 6, dans lequel le dispositif de commande (13) est conçu de façon à réduire et/ou augmenter la puissance de sortie (PW1) de manière continue ou par petites étapes.

10. Un agencement de commande de puissance et de sécurité selon l'une des revendications 6 à 9,
dans lequel les signaux de commande (POC2, ..., LOC2, ..) sont transmis par l'intermédiaire d'un bus en anneau (8).
